(19) 

Europäisches Patentamt
European Patent Office
Office européen des brevets

(11) **EP 4 582 179 A2**

(12) **EUROPEAN PATENT APPLICATION**

(43) Date of publication:
**09.07.2025 Bulletin 2025/28**

(21) Application number: 24220253.9

(22) Date of filing: **16.12.2024**

(51) International Patent Classification (IPC):
*B01J 21/04* (2006.01)    *B01J 23/847* (2006.01)
*B01J 35/30* (2024.01)    *B01J 35/40* (2024.01)
*B01J 35/45* (2024.01)    *B01J 35/61* (2024.01)
*B01J 37/08* (2006.01)

(52) Cooperative Patent Classification (CPC):
**B01J 21/04; B01J 23/8472; B01J 35/393;
B01J 35/40; B01J 35/45; B01J 35/612;
B01J 35/613; B01J 37/08**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **03.01.2024 KR 20240000760**

(71) Applicant: SK Innovation Co., Ltd.
Seoul 03188 (KR)

(72) Inventors:
• KIM, Young Kwang
  34124 Daejeon (KR)
• KIM, Soo Bean
  34124 Daejeon (KR)
• CHUNG, Hyun Suk
  34124 Daejeon (KR)
• HAN, Yong Bin
  34124 Daejeon (KR)

(74) Representative: Prüfer & Partner mbB
Patentanwälte · Rechtsanwälte
Sohnckestraße 12
81479 München (DE)

(54) **SUPPORTED CATALYST FOR MANUFACTURING CARBON NANOTUBES, CARBON NANOTUBES, AND MANUFACTURING METHOD THEREOF**

(57)    A supported catalyst for manufacturing carbon nanotubes according to the present disclosure includes a plate-shaped carrier; and a plurality of metal catalyst particles which are attached to a surface of the plate-shaped carrier and include cobalt and vanadium. A method for manufacturing carbon nanotubes according to the present disclosure includes: preparing a mixture comprising a metal precursor and a polymer gel; preparing a plate-shaped carrier by calcining the mixture; preparing a supported catalyst by attaching a plurality of metal catalyst particles comprising cobalt and vanadium to the surface of the plate-shaped carrier; and manufacturing a carbon nanotube by bringing the supported catalyst into contact with a carbon source. The carbon nanotube according to the present disclosure has an average straightness of 0.8 or more.

[FIG. 1]

EP 4 582 179 A2

**Description**

[BACKGROUND OF THE INVENTION]

1. Field of the Invention

The present disclosure relates to a supported catalyst for manufacturing carbon nanotubes, carbon nanotubes, and a manufacturing method thereof.

2. Description of the Related Art

Carbon nanotubes (CNTs) are materials used in many fields due to their excellent chemical stability and mechanical properties, as well as high thermal conductivity.

Depending on synthesis conditions, the carbon nanotubes are classified into: single-walled carbon nanotubes (SWCNT) having a structure made by rolling up one layer of graphite and connecting ends thereof; double-walled carbon nanotubes (DWCNT) having a shape in which two layers of the single-walled carbon nanotubes are arranged about a concentric axis; and multi-walled carbon nanotubes (MWCNT) composed of a plurality of single-walled carbon nanotubes in a multi-layer.

Since the carbon nanotubes are composed of a graphite structure, free electrons may move along the surface of the carbon nanotubes, and the carbon nanotubes may have high electrical conductivity. Accordingly, the carbon nanotubes may be applied to various fields that require electrical properties such as antistatic, electromagnetic shielding, heat dissipation and similar properties. In particular, when individual carbon nanotubes are arranged or oriented in a constant direction, they may have higher electrical conductivity, and the closer the shape of the carbon nanotube is to a straight line, the higher the electrical conductivity they can have.

The carbon nanotubes also have high electric attraction, and therefore are generally obtained in an entangled type in which individual carbon nanotubes are entangled. The individual carbon nanotubes separated from the entangled carbon nanotubes may be bent in a zigzag shape, and have low electrical conductivity. Accordingly, a method for manufacturing carbon nanotubes having high electrical conductivity is required.

[SUMMARY OF THE INVENTION]

An object of the present disclosure is to provide a supported catalyst for manufacturing carbon nanotubes, which is capable of providing carbon nanotubes having improved quality.

In addition, another object of the present disclosure is to provide carbon nanotubes having improved quality.

Further, another object of the present disclosure is to provide a method for manufacturing carbon nanotubes having improved quality.

Further, another object of the present disclosure is to provide a high-quality carbon nanotube which may be obtainable or obtained by such a method. For example, the carbon nanotubes obtained or manufactured by said method exhibit improved properties, e.g., regarding electrical conductivity.

To achieve the above objects, according to an aspect of the present invention, there is provided a supported catalyst for manufacturing carbon nanotubes including: a plate-shaped carrier; and a plurality of metal catalyst particles which are attached to a surface of the plate-shaped carrier and comprise cobalt and vanadium.

The "plate-shaped carrier" means a carrier having a plate shape or plate-like-shape, i.e. a shape which differs from being spherical. A plate-like-shape may be, for example, a disc shape. As such, the "plate-shaped carrier" may mean a carrier shape whose extensions in one dimensional direction (considered e.g. a "z"-direction) in the thickness direction of the plate-shaped carrier is smaller or substantially smaller than the other dimensional directions (considered e.g. "x" and "y"-directions) in the length and width directions of the plate-shaped carrier.

According to exemplary embodiments, the plate-shaped carrier may include an aluminum oxide.

According to exemplary embodiments, the plate-shaped carrier may have a thickness of 80 nm to 150 nm.

The thickness of a plate-shaped carrier is the thickness of one (a single) plate-shaped carrier and can, e.g., be determined by preparing scanning electron microscope (SEM) images, followed by measuring the thickness.

The average thickness of plate-shape carriers can e.g., also be determined by preparing scanning electron microscope (SEM) images, but from a sufficient number of plate-shaped carriers. For example, a sufficient number (such as 50) of randomly selected plate-shaped carriers is taken. From each of these plate-shaped carriers, the thickness is measured in the same way. The obtained numbers (that is, they are added up, and then divided by the number of the plate-shaped carriers, thereby obtaining the average thickness.

According to exemplary embodiments, the plate-shaped carrier may have a median particle diameter (D50) of 15 $\mu$m to 30 $\mu$m.

The median particle diameter (D50) may be defined as the value where half of the population resides above this point, and half resides below this point. The particle sizes of the plate-shaped carriers can e.g., be analyzed using a laser particle size analyzer, such as from Horiba (Horiba/LA-950V2).

According to exemplary embodiments, the plate-shaped carrier may have a BET surface area of 5 $m^2$/g to 50 $m^2$/g.

BET analysis is a method of measuring the surface area and pore size distribution of porous materials by adsorbing a gas, usually nitrogen, on the surface of the material at low temperatures. The BET surface area of the plate-shaped carrier can e.g., be determined by using a BET measuring device (such as Micromeritics/3Flex).

According to exemplary embodiments, a content of the metal catalyst particles based on a total weight of the supported catalyst may be 10% by weight to 30% by weight.

According to exemplary embodiments, a ratio of the vanadium content to the cobalt content based on a total moles of the metal catalyst particles may be more than 0 and 0.5 or less.

According to exemplary embodiments, a ratio of the vanadium content to the cobalt content based on a total moles of the metal catalyst particles may be 0.05 to 0.25.

. According to exemplary embodiments, the metal catalyst particles may have a median particle diameter (D50) of 50 nm to 150 nm, preferably may have a median particle diameter (D50) of 80 nm to 120 nm.

In addition, according to another aspect of the present invention, there is provided a use of the supported catalyst disclosed herein for manufacturing carbon nanotubes.

In addition, according to another aspect of the present invention, there is provided a method for manufacturing carbon nanotubes, preferably the nanotubes disclosed herein, including: preparing a mixture comprising a metal precursor and a polymer gel; preparing a plate-shaped carrier by calcining the mixture; preparing a supported catalyst by attaching a plurality of metal catalyst particles comprising cobalt and vanadium to the surface of the plate-shaped carrier; and manufacturing carbon nanotubes by bringing the supported catalyst into contact with a carbon source.

According to exemplary embodiments, the calcination may be performed at a temperature of 500 °C to 1,000 °C.

According to exemplary embodiments, the calcination may be performed at a temperature of 600 °C to 900 °C or 700 °C to 800 °C.

According to exemplary embodiments, a carbon source conversion ratio defined as a percentage of a total weight of the carbon nanotube to a total weight of the carbon source may be 50% to 90%.

Further, according to another aspect of the present invention, there is provided a carbon nanotube having an average straightness of 0.8 or more, which is represented by Equation 1 below:

[Equation 1]

$$\text{Average straightness} = \frac{\sum_{k=1}^{n} L_k / V_{sum,k}}{n}$$

(in Equation 1, n is an integer of 10 to 100, $L_k$ is a distance formed by connecting opposite endpoints of any single carbon nanotube in a straight line from an SEM image of the carbon nanotube, and $V_{sum,k}$ means a sum of lengths of 5 to 20 two-dimensional vectors connected to each other along a shape of the single carbon nanotube when forming the above number of the two-dimensional vectors between the opposite endpoints of the single carbon nanotube from the SEM image).

According to exemplary embodiments, the carbon nanotube (carbon nanotubes) has a length of at least about 3 $\mu$m, preferably has a length of 3 $\mu$m to 12 $\mu$m. The length may measured as the shortest distance between opposite endpoints of the carbon nanotube (a given rigid sample as it is) when a straight line is formed by connecting the opposite endpoints of the carbon nanotube as observed from a scanning electron microscope (SEM) image of the carbon nanotube.

According to exemplary embodiments, the carbon nanotube constitutes a plurality of, or is part of a plurality of, carbon nanotubes. The plurality of carbon nanotubes may be defined as a product of a carbon nanotube production or production batch, or at least a part thereof.

According to exemplary embodiments, the carbon nanotube or the (plurality of) carbon nanotubes may be obtained by a method in which carbon nanotubes can grow at a multiple surface active points where are respectively defined by locations of multiple catalysts particles located or spread on a supporting carrier.

According to exemplary embodiments, the carbon nanotube or the (plurality of) carbon nanotubes may be obtained by a method for manufacturing carbon nanotubes as described in the present disclosure.

According to exemplary embodiments, the carbon nanotube may have at least one bending part.

The supported catalyst for manufacturing carbon nanotubes according to exemplary embodiments of the present disclosure may provide carbon nanotubes having a linear-like shape. Accordingly, orientation of the carbon nanotubes may be improved, and free electrons may move smoothly on the surface of the carbon nanotubes, thereby improving the electrical conductivity of the carbon nanotubes.

The supported catalyst for manufacturing carbon nanotubes according to exemplary embodiments of the present disclosure may provide high-purity carbon nanotubes at a high yield.

The carbon nanotubes according to exemplary embodiments of the present disclosure may have a linear-like shape, thus to have high orientation.

[BRIEF DESCRIPTION OF THE DRAWINGS]

The above and other objects, features and other advantages of the present invention will be more clearly understood from the following detailed description taken in conjunction with the accompanying drawings, in which:

FIG. 1 is a schematic view illustrating a cross-section of an exemplary supported catalyst for manufacturing carbon nanotubes;

FIG. 2 is a schematic flowchart illustrating sequences of an exemplary method for manufacturing carbon nanotubes;

FIG. 3 is a particle size distribution graph of plate-shaped carriers of preparative examples;

FIGS. 4 and 5 are SEM images of plate-shaped carriers of Preparative Example 1;

FIG. 6 is an SEM image of carbon nanotubes of Example 2;

FIG. 7A is an enlarged view of a dotted line portion in FIG. 6; and

FIG. 7B is a schematic view for describing a method for calculating the straightness of carbon nanotubes shown in FIG. 7A.

[DETAILED DESCRIPTION OF THE INVENTION]

The present disclosure provides a supported catalyst for manufacturing carbon nanotubes including a plate-shaped carrier. In addition, the present disclosure provides a method for manufacturing carbon nanotubes using the supported catalyst for manufacturing carbon nanotubes, and carbon nanotubes manufactured by the same.

Hereinafter, the present disclosure will be described in detail through embodiments with reference to the accompanying drawings. However, the embodiments are merely illustrative and the present disclosure is not limited to the specific embodiments described by way of example.

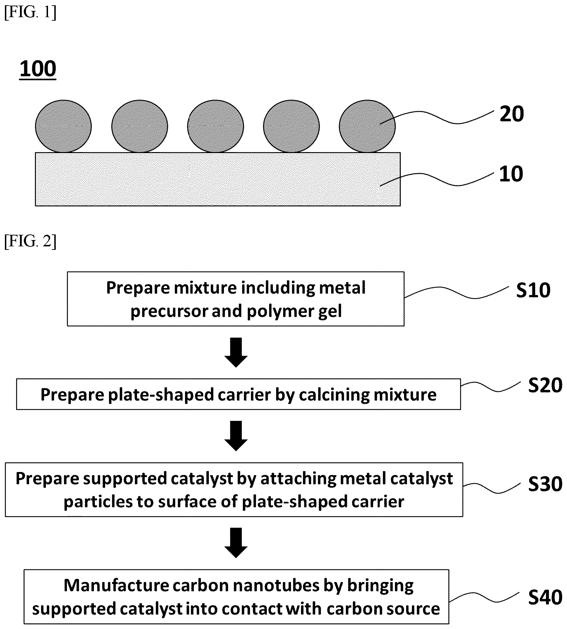

FIG. 1 is a schematic view illustrating a cross-section of an exemplary supported catalyst for manufacturing carbon nanotubes. Referring to FIG. 1, a supported catalyst 100 for manufacturing carbon nanotubes includes a plate-shaped carrier 10 and a plurality of metal catalyst particles 20.

The plate-shaped carrier 10 may have sizes in a longitudinal direction and a width direction, wherein the length in the longitudinal direction and the length om the width direction respectively may be same or different, and wherein the sizes in the longitudinal direction and in the width direction are longer and wider than a size in a thickness direction. The thickness direction may be a direction perpendicular to the longitudinal direction and the width direction. Accordingly, the plate-shaped carrier 10 may have a platelet shape.

In exemplary embodiments, the plate-shaped carrier 10 may have a thickness of 80 nm to 150 nm. In addition, a longer one of the lengths in the longitudinal direction and the width direction of the plate-shaped carrier 10 may be 15 $\mu$m to 30 $\mu$m.

According to exemplary embodiments, the plate-shaped carrier 10 may have a median particle diameter (D50) of 15 $\mu$m to 30 $\mu$m. According to some embodiments, the plate-shaped carrier 10 may have a median particle diameter (D50) of 20 $\mu$m to 28 $\mu$m.

The particle diameter of the plate-shaped carrier may mean the maximum size on a surface defined in the longitudinal direction and the width direction of the plate-shaped carrier. The median particle diameter (D50) means a particle diameter at a point where the cumulative volume distribution percentage of the particles reaches 50%. The cumulative volume distribution may be obtained, for example, by a laser particle size analyzer (e.g., LA-950V2/Horiba).

In exemplary embodiments, an average of values obtained by dividing an area of the plate-shaped carrier 10 by the thickness may be 3,000 $\mu$m to 7,000 $\mu$m. In some embodiments, the average of values obtained by dividing an area of the plate-shaped carrier 10 by the thickness may be 4,000 $\mu$m to 6,500 $\mu$m. The "area" may mean an area of the plate-shaped carrier 10 defined in the longitudinal direction and the width direction.

According to exemplary embodiments, the plate-shaped carrier 10 may have a BET surface area of 5 $m^2$/g to 50 $m^2$/g. According to some embodiments, the plate-shaped carrier 10 may have a BET surface area of 5 $m^2$/g to 25 $m^2$/g. The BET surface area may mean a nitrogen adsorption surface area measured using the Brunauer-Emmett-Teller (BET) method. The method of measuring the BET surface area is not particularly limited, but may be measured using, for example, Micromeritics/3Flex.

For example, the BET surface area may be measured by the following method. After filling a BET cell with 0.1 g of the plate-shaped carriers, by heating the cell at 150 °C in a vacuum state, the moisture may be removed. After measuring a weight of the plate-shaped carriers from which the moisture has been removed, an amount of nitrogen adsorbed on a sample may be measured while injecting nitrogen. After stopping the injection of nitrogen, an inside of the BET cell is made to the vacuum state again, an amount of nitrogen desorbed from the sample may be measured, and the BET surface area of the plate-shaped carriers may be calculated using the measurements.

The plate-shaped carrier 10 having a BET surface area within the above range may have a surface area of a width suitable for the metal catalyst particles 20 are attached.

In exemplary embodiments, the plate-shaped carrier 10 may include a metal oxide. The metal oxide may be a ceramic component which does not react with a carbon source. For example, the metal oxide may include an aluminum oxide.

The metal catalyst particles 20 include cobalt (Co) and vanadium (V). Cobalt may function as a main catalyst for a reaction of converting the carbon source into carbon nanotubes, and vanadium may function as a cocatalyst for assisting the function of cobalt as the main catalyst.

The metal catalyst particles 20 may further include other metals in addition to the cobalt and vanadium. For example, the metal catalyst particles 20 may further include iron, nickel and similar or equivalent metals.

According to exemplary embodiments, a ratio of the vanadium content to the cobalt content based on the total moles of the metals included in the metal catalyst particles 20 may be greater than 0 and 0.5 or less. According to some embodiments, the ratio of the vanadium content to the cobalt content based on the total moles of the metals included in the metal catalyst particles 20 may be 0.05 to 0.25 or 0.1 to 0.25.

Within the above range, carbon nanotubes having a higher purity and a shape more similar to a straight line may be manufactured.

According to exemplary embodiments, a content of the metal catalyst particles 20 based on a total weight of the supported catalyst 100 may be 10% by weight ("wt. %") to 30 wt. %. According to some embodiments, the content of the metal catalyst particles 20 based on the total weight of the supported catalyst 100 may be 10 wt. % to 25 wt. % or 15 wt. % to 20 wt. %.

Within the above range, carbon nanotubes having a higher purity and a shape more similar to a straight line may be manufactured.

According to exemplary embodiments, the metal catalyst particles 20 may have a median particle diameter (D50) of 50 nm to 150 nm. According to some embodiments, the metal catalyst particles 20 may have a median particle diameter (D50) of 80 nm to 120 nm. Within the above range, carbon nanotubes having a sufficiently large number of surface active points where the carbon nanotubes can grow, as well as having an appropriate length may be manufactured.

According to the present disclosure, a method for manufacturing carbon nanotubes is provided. FIG. 2 is a schematic flowchart illustrating sequences of an exemplary method for manufacturing carbon nanotubes. Hereinafter, each step of the method will be described in detail with reference to the drawings.

First, a mixture including a metal precursor and a polymer gel is prepared (for example, S10 in FIG. 2). The metal precursor may be a compound of metals included in the metal oxide of the plate-shaped carrier. The polymer gel may act as a template so that the metal precursor can be formed in a platelet shape.

The metal precursor may include, for example, a metal nitride, a metal hydroxide, a metal sulfide, etc. For example, the metal precursor may be an aluminum precursor. For example, the aluminum precursor may be aluminum nitrate.

The polymer gel may be a polymer hydrogel. For example, the polymer gel may be prepared by mixing a hydrophilic polymer and water. The hydrophilic polymer may include, for example, polyvinyl alcohol, polyvinylacetate, polyvinyl butyral, polyethylene glycol, polyvinylpyrrolidone, polyacrylonitrile, polytetrafluoroethylene, ethylene glycol, and diethylene glycol, etc. These may be used alone or in combination of two or more thereof.

In exemplary embodiments, the polymer gel may be prepared by mixing 300 to 1,000 parts by weight ("wt. parts") of water based on 100 wt. parts of the hydrophilic polymer. In this case, the mixing may be performed at a temperature of about 80 °C to 95 °C.

In exemplary embodiments, a content of the metal precursor may be 30 to 70 wt. parts based on 100 wt. parts of the polymer gel.

The mixture including the metal precursor and the polymer gel may further include other components. For example, the mixture may further include water to dissolve the metal precursor, and may further include a compound which allows the metal oxide formed from the metal precursor to have an appropriate surface area, porosity, and low density.

The compound may include, for example, glycine, proline, glutamic acid, serine, theanine, methionine, valine, leucine, L-aspartic acid, glutathione, etc. These may be used alone or in combination of two or more thereof.

Then, a plate-shaped carrier is prepared by calcining the mixture (for example, S20 in FIG. 2). As the polymer gel of an organic component is removed by the calcination, the plate-shaped carrier may be formed.

According to exemplary embodiments, the calcination may be performed by inputting the mixture into a heating furnace, increasing the temperature at a heating rate of about 2 to 10 °C/min, and maintaining the temperature when reaching the calcination temperature.

According to exemplary embodiments, the calcination may be performed at a temperature of 500 °C to 1,000 °C. According to some embodiments, the calcination may be performed at a temperature of 600 °C to 900 °C or 700 °C to 850 °C. Within the above range, a plate-shaped carrier having an appropriate thickness may be formed.

The calcination may be performed for about 3 hours to 10 hours or 4 hours to 6 hours, and may be performed in an air atmosphere. Accordingly, a plate-shaped carrier including the metal oxide may be formed.

Next, a supported catalyst is prepared by attaching a plurality of metal catalyst particles to the surface of the plate-shaped carrier (for example, S30 in FIG. 2). The metal catalyst particles include cobalt and vanadium, wherein details of the metal catalyst particles may be the same as the above description.

According to exemplary embodiments, the plate-shaped carrier and the plurality of metal catalyst particles are mixed, and then calcined to manufacture the supported catalyst. For example, the calcination may be performed at a temperature of 500 °C to 1,000 °C.

Next, a carbon nanotube is manufactured by bringing the supported catalyst into contact with the carbon source (for example, S40 in FIG. 2). The manufacturing may be performed in a batch reactor or a continuous reactor.

For example, the carbon nanotubes may be manufactured by inputting the supported catalyst into the batch reactor, and injecting a mixed gas including a carbon source into the reactor. The carbon source may be a gaseous hydrocarbon compound, and the mixed gas may include the carbon source and hydrogen. A mixing ratio of the carbon source and hydrogen is not particularly limited, but may be, for example, 25:75 to 75:25 in a volume ratio.

According to exemplary embodiments, the carbon nanotubes may be manufactured by bringing the supported catalyst into contact with the carbon source, and then performing a reaction at a temperature of about 500 °C to 1,000 °C for 10 to 100 minutes.

According to exemplary embodiments, a carbon source conversion ratio, which is defined as a percentage of a total weight of the carbon nanotubes to a total weight of the carbon source, may be 50% to 90%. According to some embodiments, the carbon source conversion ratio, which is defined as a percentage of the total weight of the carbon nanotubes to the total weight of the carbon source, may be 60% to 90%. The higher the carbon source conversion ratio, the better the productivity of the carbon nanotubes.

The carbon source conversion ratio may be determined by calculation of a ratio of the weight of the manufactured carbon nanotubes to the total weight of carbon atoms of the carbon sources injected during synthesis of carbon nanotubes. According to exemplary embodiments, a carbon nanotube production efficiency of the supported catalyst for manufacturing carbon nanotubes may be 10 $g_{CNT}/g_{CAL}$ to 32 $g_{CNT}/g_{CAL}$. According to some embodiments, the carbon nanotube production efficiency of the supported catalyst for manufacturing carbon nanotubes may be 25 $g_{CNT}/g_{CAL}$ to 32 $g_{CNT}/g_{CAL}$.

The carbon nanotube production efficiency may be defined as a ratio of the total weight of the carbon nanotube to the total weight of the supported catalyst. For example, when an input amount of the supported catalyst is about 1 g and a yield of the carbon nanotube is about 15 g, the carbon nanotube production efficiency of the supported catalyst may be about 15 $g_{CNT}/g_{CAL}$.

For example, the production efficiency may be calculated based on the weight of the carbon nanotube produced when about 37.5 g of the carbon source was input while using 1 g of the supported catalyst, and the reaction was performed at a temperature of about 700 °C.

The carbon nanotube according to the present disclosure has an average straightness of 0.8 or more, which is represented by Equation 1 below.

[Equation 1]

$$\text{Average straightness} = \frac{\sum_{k=1}^{n} L_k / V_{sum\_k}}{n}$$

In Equation 1, n is an integer of 10 to 100, $L_k$ is a distance formed by connecting opposite endpoints of any single carbon nanotube in a straight line from an SEM image of the carbon nanotube, and $V_{sum,k}$ means a sum of lengths of 5 to 20 two-dimensional vectors connected to each other along a shape of the single carbon nanotube when forming the above number of the two-dimensional vectors between the opposite endpoints of the single carbon nanotube from the SEM image.

The "average straightness" may be an average value of the straightness values of a plurality of single carbon nanotubes, and the straightness may be an indication of how similar the carbon nanotube is to a linear shape. The plurality of single carbon nanotubes optionally may be represented by the production product or the production batch obtained from the manufacture (regardless whether obtained from a batch reactor or a continuous reactor). The straightness may be represented as a ratio of the length $L_k$ when the carbon nanotube has a linear shape to a value $V_{sum,k}$ approximating the actual length of the carbon nanotube.

When the carbon nanotube has a linear shape, the length may be measured as the shortest distance between opposite endpoints of the carbon nanotube, for example, the length of the straight line formed by connecting the opposite endpoints of the carbon nanotube as observed from a scanning electron microscope (SEM) image of the carbon nanotube.

The value $V_{sum,k}$ approximating the actual length of the carbon nanotube may mean the sum of the lengths of 5 to 20 two-dimensional vectors connected to each other along the shape when forming the above number of the two-dimensional vectors between the opposite endpoints of the carbon nanotube from the SEM image. The two-dimensional vectors may be connected starting from one endpoint of the carbon nanotube to the other endpoint. For example, the starting point of any vector among the two-dimensional vectors may be the same as one endpoint of the carbon nanotube or an ending point of another vector, and the ending point of any vector may be the same as the other end of the carbon nanotube or the starting point of the other vector.

In addition, the two-dimensional vectors may be linear vectors having a direction and a magnitude value, and the straightness may be calculated by using the sum of the magnitude values as a value approximating the actual length of the carbon nanotube.

The number of the two-dimensional vectors may be adjusted between 5 and 20, and the number and length thereof may vary depending on the shape of the carbon nanotube. For example, when the carbon nanotube includes, or the carbon nanotubes include, at least one bending part and a bending radius of the bending part is small, the number of two-dimensional vectors may be increased and the length may be decreased. For example, the length of the two-dimensional vectors may be 1 nm to 1,000 nm.

Accordingly, as the shape of the carbon nanotube is closer to the linear shape, it may have a value of straightness closer to 1, and when the shape of the carbon nanotube is the linear shape, the straightness may be 1. For example, the straightness of any carbon nanotube may be 0.6 or more, and an average value of the straightness may be 0.8 or more.

The average straightness may be an average value of the straightness values of 10 to 100 carbon nanotubes. For example, n may be an integer of 10 to 100 or 20 to 70.

According to exemplary embodiments, the average straightness of the carbon nanotube may be 0.85 or more, 0.86 or more, 0.87 or more, 0.9 or more, 0.91 or more, 0.92 or more, 0.95 or more, or 0.96 or more, and may be 1 or less.

According to exemplary embodiments, the carbon nanotube may include at least one bending part. For example, the carbon nanotube may include 1 to 10 bending parts, or 2 or more and 10 or less; or 3 or more and 10 or less; or 8 or less; or 6 or less bending parts. The "bending part" may mean a region where the carbon nanotube extends from one point and bends to another point in one rotational direction, and may be defined as different bending parts when the rotational direction is changed.

According to exemplary embodiments, the length of the carbon nanotube may be about 3 $\mu$m to 12 $\mu$m. Here, the length of the carbon nanotube may be measured as the shortest distance between opposite endpoints of the carbon nanotube when a straight line is formed by connecting the opposite endpoints of the carbon nanotube, as observed from a scanning electron microscope (SEM) image of the carbon nanotube.

Hereinafter, experimental examples including specific examples and comparative examples are proposed to facilitate understanding of the present invention. However, the following examples are only given for illustrating the present invention and are not intended to limit the appended claims. It will be apparent those skilled in the art that various alterations and modifications are possible, and such alterations and modifications are duly included in the appended claims.

## Preparative Example 1

A polyvinyl alcohol gel was prepared by mixing 8 g of polyvinyl alcohol (Sigma-Aldrich) and 40 g of deionized water while stirring at 90 °C for 30 minutes. An aluminum precursor solution was prepared by mixing 21 g of anhydrous aluminum nitrate, 7 g of glycine, and 12 g of deionized water while stirring for 30 minutes. The aluminum precursor solution was slowly input into the polyvinyl alcohol gel, followed by stirring for 30 minutes to prepare a mixture.

The mixture was placed in a muffle furnace, the temperature was increased at a rate of 5 °C/min while passing air therethrough at a flow rate of 2 L/min, and was calcined for 5 hours after the temperature reached 600 °C to prepare a plate-shaped carrier.

## Preparative Example 2

A plate-shaped carrier was prepared in the same manner as in Preparative Example 1, except that the calcination temperature was changed to 700 °C.

### Preparative Example 3

A plate-shaped carrier was prepared in the same manner as in Preparative Example 1, except that the calcination temperature was changed to 800 °C.

### Preparative Example 4

A plate-shaped carrier was prepared in the same manner as in Preparative Example 1, except that the calcination temperature was changed to 900 °C.

### Experimental Example: Analysis of shape and size of the plate-shaped carrier

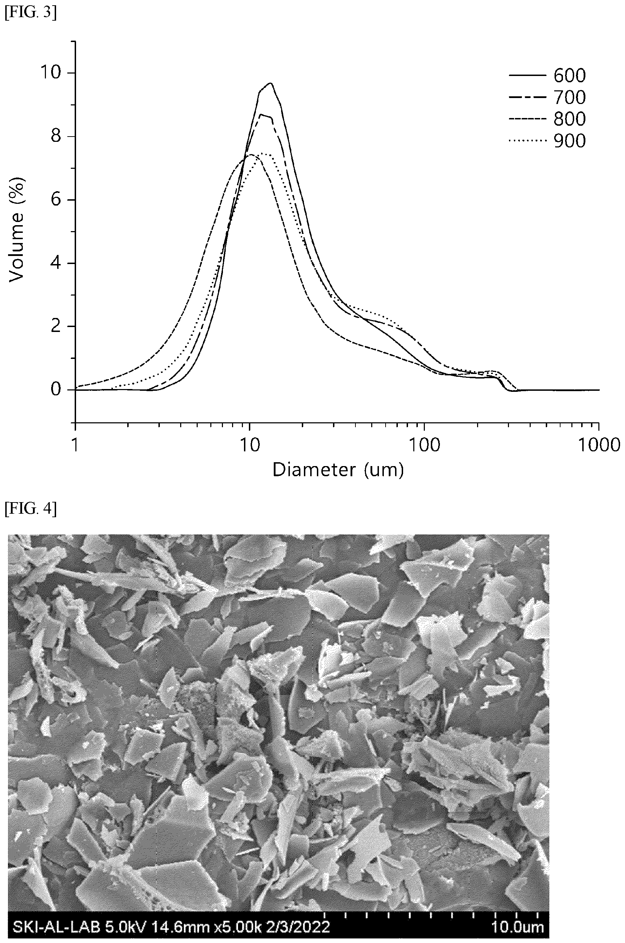

Particle sizes of the plate-shaped carriers of the preparative examples were analyzed using a laser particle size analyzer (Horiba/LA-950V2). FIG. 3 illustrates a particle size distribution graph of the plate-shaped carriers of the preparative examples. In the graph, the particle size distribution curves are represented as a volume-based frequency depending on the particle diameter (the maximum size in a surface direction). In addition, the median particle diameters (D50) of the plate-shaped carriers of the preparative examples measured by the particle size analyzer are shown in Table 1 below.

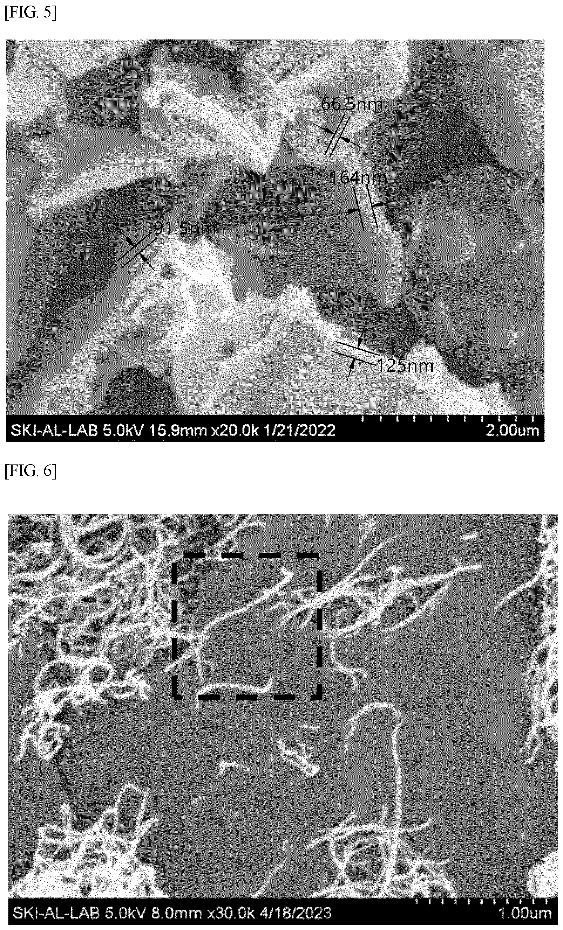

Scanning electron microscope (SEM) images of the plate-shaped carriers of the preparative examples were taken, and the thicknesses of about 50 random individual plate-shaped carriers were measured to calculate average thicknesses thereof. FIGS. 4 and 5 illustrate SEM images of the plate-shaped carrier of Preparative Example 1. Specifically, FIG. 5 is an SEM image of the plate-shaped carrier of Preparative Example 1 taken at a higher magnification than FIG. 4.

As shown in FIG. 5, the thicknesses of random plate-shaped carrier particles were measured, then the thickness measurements for about 50 particles were repeated in the same manner to calculate the average thicknesses of the plate-shaped carriers of the preparative examples, and results thereof are shown in Table 1 below.

In addition, BET surface areas of the plate-shaped carriers of the preparative examples were measured using a BET measuring device (Micromeritics/3Flex), and results thereof are also shown in Table 1 below.

[TABLE 1]

| Item | Median particle diameter ($\mu$m) | Average thickness ($\mu$m) | BET surface area ($m^2$/g) |
| --- | --- | --- | --- |
| Preparative Example 1 | 24.4 | 0.1112 | 21.1 |
| Preparative Example 2 | 26.6 | 0.1219 | 9.2 |
| Preparative Example 3 | 21.9 | 0.1181 | 31.1 |
| Preparative Example 4 | 27.5 | 0.0970 | 49.0 |

### Example 1

(1) Preparation of supported catalyst

A solution was prepared by dissolving a cobalt precursor and a vanadium precursor in distilled water to satisfy a molar ratio of cobalt 80 mol% and vanadium 20 mol%. The plate-shaped carrier of Preparative Example 1 was input into the solution and calcined at 500 °C to prepare a supported catalyst including metal catalyst particles. The content of the metal catalyst particles was 16 wt. % based on the total weight of the supported catalyst.

(2) Manufacturing of carbon nanotubes

1 g of the supported catalyst was input into a tube furnace, and a mixed gas including ethylene and hydrogen in a volume ratio of 1:1 was input at a rate of 2 L/min and allowed to react at a temperature of 700 °C for 30 minutes to obtain about 24.8 g of carbon nanotubes. The total weight of ethylene input for 30 minutes was 37.5 g.

**Example 2**

A supported catalyst and carbon nanotubes were manufactured in the same manner as in Example 1, except that the plate-shaped carrier of Preparative Example 2 was used when preparing the supported catalyst. At this time, the yield of the carbon nanotubes was about 31.1 g.

**Example 3**

A supported catalyst and carbon nanotubes were manufactured in the same manner as in Example 1, except that the plate-shaped carrier of Preparative Example 3 was used when preparing the supported catalyst. At this time, the yield of the carbon nanotubes was about 20.7 g.

**Example 4**

A supported catalyst and carbon nanotubes were manufactured in the same manner as in Example 1, except that the plate-shaped carrier of Preparative Example 4 was used when preparing the supported catalyst. At this time, the yield of the carbon nanotubes was about 22.2 g.

**Example 5**

A supported catalyst and carbon nanotubes were manufactured in the same manner as in Example 2, except that the supported catalyst was prepared so that the content of the metal catalyst particles was 20 wt. % based on the total weight of the supported catalyst. At this time, the yield of the carbon nanotubes was about 27.2 g.

**Example 6**

A supported catalyst and carbon nanotubes were manufactured in the same manner as in Example 2, except that the supported catalyst was prepared so that the content of metal catalyst particles was 24 wt. % based on the total weight of the supported catalyst. At this time, the yield of the carbon nanotubes was about 28.0 g.

**Example 7**

A supported catalyst and carbon nanotubes were manufactured in the same manner as in Example 2, except that the supported catalyst was prepared so that the content of metal catalyst particles was 12 wt. % based on the total weight of the supported catalyst. At this time, the yield of the carbon nanotubes was about 25.6 g.

**Example 8**

A supported catalyst and carbon nanotubes were manufactured in the same manner as in Example 2, except that the cobalt precursor and vanadium precursor were used so as to satisfy the molar ratio of cobalt 70 mol % and vanadium 30 mol %. At this time, the yield of the carbon nanotubes was about 13.0 g.

**Example 9**

A supported catalyst and carbon nanotubes were manufactured in the same manner as in Example 2, except that the cobalt precursor and vanadium precursor were used so as to satisfy the molar ratio of cobalt 85 mol % and vanadium 15 mol %. At this time, the yield of the carbon nanotubes was about 29.6 g.

**Example 10**

A supported catalyst and carbon nanotubes were manufactured in the same manner as in Example 2, except that the cobalt precursor and vanadium precursor were used so as to satisfy the molar ratio the molar ratio of cobalt 90 mol % and vanadium 10 mol %. At this time, the yield of the carbon nanotubes was about 28.9 g.

**Comparative Example 1**

A supported catalyst and carbon nanotubes were manufactured in the same manner as in Example 1, except that amorphous alumina particles (Puralox TH 100/150) were used as the carrier. At this time, the yield of carbon nanotubes was approximately 26.4 g.

## Comparative Example 2

The supported catalyst and carbon nanotubes were manufactured in the same manner as in Example 5, except that amorphous alumina particles (Puralox TH 100/150) were used as the carrier. At this time, the yield of carbon nanotubes was about 24.6 g.

Table 2 below shows type of the carriers, composition of metal catalyst particles, content of metal catalyst particles in the supported catalysts, and yield of the carbon nanotubes of the examples and comparative examples.

[TABLE 2]

| | Carrier | Metal catalyst particles | | | Carbon nanotube | | |
|---|---|---|---|---|---|---|---|
| | | Co:V composition | Content | Total weight of catalyst (g) | Yiel d (g) | Total weight of carbon source (g) | Carbon source conversio n ratio (%) |
| | | (molar ratio mol/mol) | (Weight of total weight of supported catalyst %) | | | | |
| Example 1 | Preparative Example 1 | 80:20 | 16 | 1.000 | 24.8 | 37.5 | 63.5 |
| Example 2 | Preparative Example 2 | 80:20 | 16 | 1.000 | 31.1 | 37.5 | 80.2 |
| Example 3 | Preparative Example 3 | 80:20 | 16 | 1.000 | 20.7 | 37.5 | 52.5 |
| Example 4 | Preparative Example 4 | 80:20 | 16 | 1.000 | 22.2 | 37.5 | 56.5 |
| Example 5 | Preparative Example 2 | 80:20 | 20 | 1.000 | 27.2 0 | 37.5 | 69.8 |
| Example 6 | Preparative Example 2 | 80:20 | 24 | 1.000 | 28.0 | 37.5 | 71.9 |
| Example 7 | Preparative Example 2 | 80:20 | 12 | 1.000 | 25.5 6 | 37.5 | 65.5 |
| Example 8 | Preparative Example 2 | 70:30 | 16 | 1.000 | 13.0 | 37.5 | 32.1 |
| Example 9 | Preparative Example 2 | 85:15 | 16 | 1.000 | 29.6 | 37.5 | 76.2 |
| Example 10 | Preparative Example 2 | 90:10 | 16 | 1.000 | 28.9 | 37.5 | 74.3 |
| Comparati ve Example 1 | Atypical (spherical as comparison) | 80:20 | 16 | 1.000 | 26.4 | 37.5 | 67.8 |
| Comparati ve Example 2 | Atypical (spherical as comparison) | 80:20 | 20 | 1.000 | 24.6 | 37.5 | 63.0 |

## Experimental Example: Calculation and evaluation of average straightness of the carbon nanotubes

After taking SEM images of the carbon nanotubes of the examples and comparative examples, the straightness and average value of a single carbon nanotube were calculated from the SEM images, respectively.

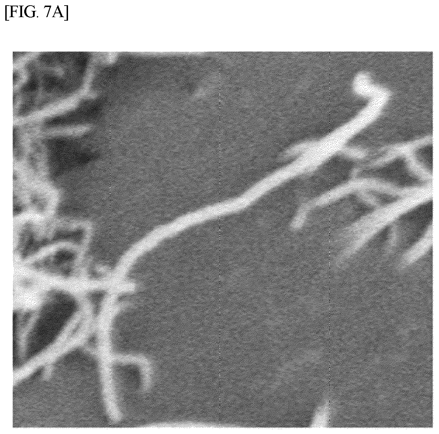

FIG. 6 illustrates an SEM image of the carbon nanotube of Example 2, and FIG. 7A illustrates an enlarged view of the dotted line portion in FIG. 6. Specifically, FIG. 7A is an SEM image of any single carbon nanotube.

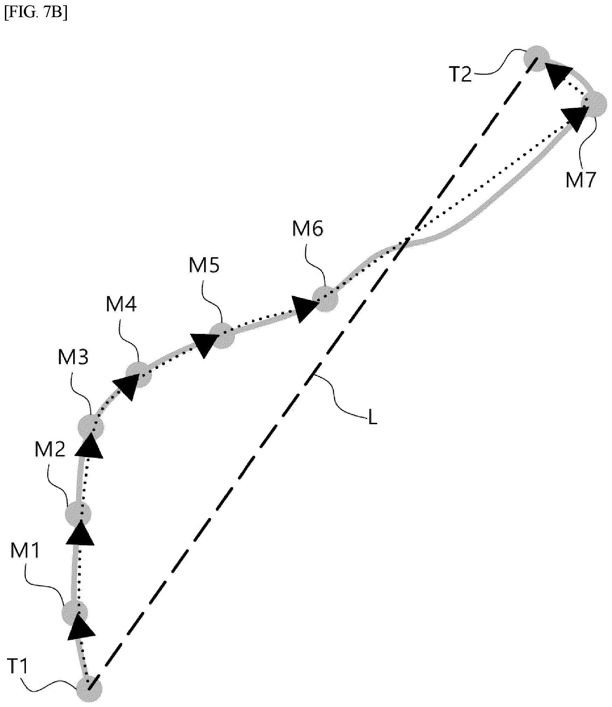

FIG. 7B is a schematic view for describing a method for calculating the straightness of the carbon nanotube shown in FIG. 7A.

Referring to FIGS. 6, 7A and 7B, the length $L_k$ of a straight line (solid line L in FIG. 7B) connecting opposite endpoints T1 and T2 of a single carbon nanotube was measured from the SEM image. In addition, when seven intermediate points (M1 to M7 in FIG. 7B) may be set between the opposite endpoints (T1 and T2 in FIG. 7B) of the single carbon nanotube, and eight vectors (dotted arrows in FIG. 7B) connecting points T1-M1, M1-M2, M2-M3, M3-M4, M4-M5, M5-M6, M6-M7 and M7-T2 are formed, the straightness $L_k/V_{sum,k}$ was calculated using a value $V_{sum,k}$ obtained by adding up the lengths of the respective vectors. In this way, the straightness for about 20 (n=20 in Equation 1) single carbon nanotubes was calculated, and the average value (which is also referred to as "average straightness") thereof was calculated according to Equation 1.

By repeating the measurement and calculation in the same manner as described above, $L_k$, $V_{sum,k}$, straightness and average straightness of the carbon nanotubes of Example 2, Comparative Example 1 and Comparative Example 2 were determined, and results thereof are shown in Tables 3 to 5 below, respectively. In addition, the average straightness of the carbon nanotubes of the remaining examples and comparative examples was also calculated in the same manner, and results thereof are shown in Table 6 below.

[TABLE 3]

| Example 2 | | | |
|---|---|---|---|
| No | Straightness | $L_k$ | $V_{sum,k}$ |
| 1 | 0.916 | 10.144 | 11.072 |
| 2 | 0.991 | 7.276 | 7.341 |
| 3 | 0.983 | 6.229 | 6.336 |
| 4 | 0.979 | 5.250 | 5.360 |
| 5 | 1.000 | 8.172 | 8.172 |
| 6 | 1.002 | 4.703 | 4.693 |
| 7 | 0.973 | 4.027 | 4.140 |
| 8 | 0.997 | 4.484 | 4.496 |
| 9 | 0.973 | 8.402 | 8.636 |
| 10 | 0.949 | 5.752 | 6.060 |
| 11 | 0.982 | 8.731 | 8.896 |
| 12 | 0.985 | 11.242 | 11.411 |
| 13 | 1.000 | 7.897 | 7.897 |
| 14 | 0.992 | 10.656 | 10.737 |
| 15 | 0.962 | 10.581 | 11.003 |
| 16 | 0.985 | 5.155 | 5.235 |
| 17 | 0.992 | 6.366 | 6.417 |
| 18 | 0.948 | 4.410 | 4.653 |
| 19 | 0.915 | 5.215 | 5.700 |
| 20 | 0.842 | 5.577 | 6.622 |
| Average straightness | 0.968 | | |

[TABLE 4]

| Comparative Example 1 | | | |
|---|---|---|---|
| No | Straightness | $L_k$ | $V_{sum,k}$ |
| 1 | 0.886 | 6.660 | 7.517 |
| 2 | 0.669 | 4.152 | 6.206 |

(continued)

| Comparative Example 1 | | | |
|---|---|---|---|
| No | Straightness | $L_k$ | $V_{sum,k}$ |
| 3 | 0.799 | 3.916 | 4.899 |
| 4 | 0.661 | 5.423 | 8.208 |
| 5 | 0.887 | 2.765 | 3.118 |
| 6 | 0.456 | 1.993 | 4.372 |
| 7 | 0.843 | 3.226 | 3.825 |
| 8 | 0.394 | 1.613 | 4.089 |
| 9 | 0.520 | 3.329 | 6.408 |
| 10 | 0.832 | 2.673 | 3.213 |
| 11 | 0.604 | 2.804 | 4.641 |
| 12 | 0.305 | 1.178 | 3.868 |
| 13 | 0.267 | 1.619 | 6.073 |
| 14 | 0.861 | 6.531 | 7.581 |
| 15 | 0.494 | 3.615 | 7.324 |
| 16 | 0.424 | 2.146 | 5.066 |
| 17 | 0.277 | 2.174 | 7.841 |
| 18 | 0.535 | 3.709 | 6.926 |
| 19 | 0.829 | 4.584 | 5.533 |
| 20 | 0.886 | 5.424 | 6.125 |
| Average straightness | 0.621 | | |

[TABLE 5]

| Comparative Example 2 | | | |
|---|---|---|---|
| No | Straightness | $L_k$ | $V_{sum,k}$ |
| 1 | 0.779 | 2.182 | 2.801 |
| 2 | 0.954 | 2.376 | 2.492 |
| 3 | 0.827 | 4.566 | 5.518 |
| 4 | 0.903 | 7.045 | 7.799 |
| 5 | 0.633 | 2.367 | 3.737 |
| 6 | 0.924 | 5.357 | 5.799 |
| 7 | 0.285 | 3.340 | 11.725 |
| 8 | 0.925 | 4.505 | 4.870 |
| 9 | 0.902 | 3.560 | 3.945 |
| 10 | 0.756 | 5.262 | 6.957 |
| 11 | 0.592 | 3.250 | 5.488 |
| 12 | 0.327 | 3.602 | 11.022 |
| 13 | 0.787 | 4.835 | 6.146 |
| 14 | 0.329 | 1.784 | 5.418 |
| 15 | 0.818 | 2.122 | 2.594 |

(continued)

| Comparative Example 2 | | | |
|---|---|---|---|
| No | Straightness | $L_k$ | $V_{sum,k}$ |
| 16 | 0.920 | 3.720 | 4.045 |
| 17 | 0.815 | 4.298 | 5.276 |
| 18 | 0.852 | 3.642 | 4.275 |
| 19 | 0.965 | 4.817 | 4.993 |
| 20 | 0.907 | 2.849 | 3.142 |
| Average straightness | 0.760 | | |

[TABLE 6]

| | Average straightness |
|---|---|
| Example 1 | 0.820 |
| Example 2 | 0.968 |
| Example 3 | 0.864 |
| Example 4 | 0.869 |
| Example 5 | 0.871 |
| Example 6 | 0.881 |
| Example 7 | 0.865 |
| Example 8 | 0.836 |
| Example 9 | 0.910 |
| Example 10 | 0.922 |
| Comparative example 1 | 0.621 |
| Comparative example 2 | 0.760 |

Referring to Table 6, the carbon nanotubes of the examples had a high average straightness of 0.800 or more.

The carbon nanotubes of Comparative Examples 1 and 2 were manufactured using a supported catalyst including a spherical carrier. Accordingly, carbon nanotubes having a low straightness were manufactured.

The contents described above are merely an example of applying the principle of the present disclosure, and other configurations may be further included.

**Claims**

1. A supported catalyst (100) for manufacturing carbon nanotubes comprising:

   a plate-shaped carrier (10); and
   a plurality of metal catalyst particles (20) which are attached to a surface of the plate-shaped carrier (10) and comprise cobalt and vanadium.

2. The supported catalyst (100) for manufacturing carbon nanotubes according to claim 1, wherein the plate-shaped carrier (10) comprises an aluminum oxide.

3. The supported catalyst (100) for manufacturing carbon nanotubes according to claim 1 or claim 2, wherein the plate-shaped carrier (10) has a thickness of 80 nm to 150 nm, and/or wherein the plate-shaped carrier (10) has a median particle diameter (D50) of 15 $\mu$m to 30 $\mu$m.

4. The supported catalyst (100) for manufacturing carbon nanotubes according to any one of claims 1 to 3, wherein the plate-shaped carrier (10) has a BET surface area of 5 m$^2$/g to 50 m$^2$/g.

5. The supported catalyst (100) for manufacturing carbon nanotubes according to any one of claims 1 to 4, wherein a content of the metal catalyst particles (20) based on a total weight of the supported catalyst (100) is 10% by weight to 30% by weight, and/or wherein .

6. The supported catalyst (100) for manufacturing carbon nanotubes according to any one of claims 1 to 5, wherein a ratio of the vanadium content to the cobalt content based on a total moles of the metal catalyst particles (20) is more than 0 and 0.5 or less, preferably is 0.05 to 0.25.

7. The supported catalyst (100) for manufacturing carbon nanotubes according to any one of claims 1 to 6, wherein the metal catalyst particles (20) have a median particle diameter (D50) of 50 nm to 150 nm, preferably have a median particle diameter (D50) of 80 nm to 120 nm.

8. Use of the supported catalyst (100) according to any one of claims 1 to 7 for manufacturing carbon nanotubes.

9. A method for manufacturing carbon nanotubes, comprising:

preparing a mixture comprising a metal precursor and a polymer gel;
preparing a plate-shaped carrier by calcining the mixture;
preparing a supported catalyst (100) by attaching a plurality of metal catalyst particles (20) comprising cobalt and vanadium to the surface of the plate-shaped carrier (10); and
manufacturing carbon nanotubes by bringing the supported catalyst (100) into contact with a carbon source.

10. The method for manufacturing carbon nanotubes according to claim 9, wherein the calcination is performed at a temperature of 500 °C to 1,000 °C.

11. The method for manufacturing carbon nanotubes according to claim 9 or claim 10, wherein a carbon source conversion ratio defined as a percentage of a total weight of the carbon nanotube to a total weight of the carbon source is 50% to 90%.

12. Carbon nanotubes having an average straightness of 0.8 or more, which is represented by Equation 1 below:

[Equation 1]

$$\text{Average straightness} = \frac{\sum_{k=1}^{n} L_k / V_{sum,k}}{n}$$

(in Equation 1, n is an integer of 10 to 100, $L_k$ is a distance formed by connecting opposite endpoints of any single carbon nanotube in a straight line from an SEM image of the carbon nanotube, and $V_{sum,k}$ is a sum of lengths of 5 to 20 two-dimensional vectors connected to each other along a shape of the single carbon nanotube when forming the above number of the two-dimensional vectors between the opposite endpoints of the single carbon nanotube from the SEM image).

13. The carbon nanotubes according to claim 12, wherein the carbon nanotube has at least one bending part.

14. The carbon nanotubes according to claim 12 or 13, wherein the carbon nanotube has a length of at least about 3 $\mu$m, preferably has a length of 3 $\mu$m to 12 $\mu$m, wherein the length is measured as the shortest distance between opposite endpoints of the carbon nanotube when a straight line is formed by connecting the opposite endpoints of the carbon nanotube as observed from a scanning electron microscope (SEM) image of the carbon nanotube.

15. The carbon nanotubes according to any one of claims 12 to 14, wherein the carbon nanotube constitutes, or is part of, a plurality of carbon nanotubes, optionally wherein the plurality of carbon nanotubes is defined by being a product of a carbon nanotube production or production batch.

[FIG. 1]

**100**

20

10

[FIG. 2]

| | |
|---|---|
| Prepare mixture including metal precursor and polymer gel | S10 |

↓

| | |
|---|---|
| Prepare plate-shaped carrier by calcining mixture | S20 |

↓

| | |
|---|---|
| Prepare supported catalyst by attaching metal catalyst particles to surface of plate-shaped carrier | S30 |

↓

| | |
|---|---|
| Manufacture carbon nanotubes by bringing supported catalyst into contact with carbon source | S40 |

[FIG. 3]

[FIG. 4]

SKI-AL-LAB 5.0kV 14.6mm x5.00k 2/3/2022                    10.0um

[FIG. 5]

[FIG. 6]

[FIG. 7A]

[FIG. 7B]